# EUROPÄISCHE PATENTSCHRIFT

(11) **EP 0 746 473 B1**
(45) Veröffentlichungstag und Bekanntmachung des Hinweises auf die Patenterteilung: **15.10.1997**
(21) Anmeldenummer: 95908283.5
(22) Anmeldetag: 16.02.1995
(51) Int. Cl.: B44C 3/08, B29C 59/02, B44B 5/00, B29C 51/42

(54) **VERFAHREN UND VORRICHTUNG ZUR HERSTELLUNG VON SCHAUMSTOFF-DEKORPLATTEN**
PROCESS AND DEVICE FOR PRODUCING DECORATIVE FOAM PANELS
PROCEDE ET DISPOSITIF PERMETTANT DE FABRIQUER DES PANNEAUX DECORATIFS EN PRODUIT ALVEOLAIRE

(30) Priorität: 22.02.1994 DE 4405592; 20.01.1995 DE 19501598
(43) Veröffentlichungstag der Anmeldung: 11.12.1996
(73) Patentinhaber: INFRA-FOLIENKABEL GmbH, D-32108 Bad Salzuflen (DE)
(72) Erfinder: FRIEMUTH, Bernd, D-32108 Bad Salzuflen (DE)
(74) Vertreter: Hoffmeister, Helmut, Dr. Dipl.-Phys.
(86) Internationale Anmeldenummer: EP9500560
(87) Internationale Veröffentlichungsnummer: WO9522463

(56) Entgegenhaltungen:
- EP-A- 0 299 168
- WO-A-93/22149
- GB-A- 2 184 400
- US-A- 4 643 789

## Beschreibung

Die Erfindung betrifft ein Verfahren zur Herstellung von Dekorplatten, die aus einem Polystyrol-Schaumstoffblatt und aus einem mit diesem verbundenen Dekorfolien-Abschnitt bestehen. Die Erfindung bezieht sich ferner auf eine Vorrichtung zur Herstellung von Dekorplatten unter Verwendung des genannten Verfahrens.

Heim- und Handwerker verwenden seit Jahren für die Innenraumgestaltung Wand- und Deckenplatten, die im wesentlichen aus Schaumstoff bestehen. Derartige Platten sind vorteilhaft, da sie neben der ästhetischen Funktion auch eine zusätzliche Wärmeisolierung ergeben.

Es sind Wand- und Deckendekorplatten mit abwaschbarer Dekorfläche bekannt, bei denen die Dekorfläche mit einem Folienüberzug versehen ist. Hierbei werden thermoplastisch verformbare Dekorfolien verwendet, die relativ dick sind und es erlauben, daß sie durch einen gesonderten Tiefzieh-Arbeitsgang thermoplastisch bleibend verformt werden. Diese aus thermoplastischen Folienabschnitten bestehenden Dekorreliefs werden anschließend auf ein schaumstoffblatt aufgeklebt, wobei das Relief so gestaltet sein muß, daß genügend Klebefläche mit der planen Oberseite des Schaumstoffblattes Kontakt hat.

Nachteilig ist hierbei, daß an den Stellen, an denen das Folienrelief keinen Kontakt hat mit dem Schaumstoffblatt, Hohlräume verbleiben, die druck- und verformempfindlich sind. Außerdem ist es erforderlich, Reliefformen zu verwenden, die genügend Klebefläche verteilt über das Schaumstoffblatt ergeben. Der Gestalter einer solchen Dekorplatte ist daher in seiner Gestaltungsfreiheit eingeschränkt.

Weiterhin ist eine Dekorplatte bekannt, bei der eine Dekorfolie mittels eines Vakuum-Tiefziehverfahrens mit einer extrudierten Hartschaumplatte verformt und verklebt wird. Extrudierter Schaumstoff hat den Vorteil, daß er eine wesentlich höhere Flächenfestigkeit hat als ein plattenförmiger Rohling, der lediglich aus einem Schaumstoff-Block geschnitten ist. Nachteilig ist jedoch hierbei, daS derartige extrudierte, d.h. in Einzelformen tiefgezogene Hartschaumplatten, wesentlich kostspieliger sind. Als weiterer Nachteil ergibt sich, daß zur folienabgewandten Seite hin der extrudierte Schaum häufig zur "Schüsselung" neigt, d. h. sich zur Schaumstoffseite hin verwirft. Der extrudierte Schaum benötigt zur Schrumpfung eine relativ lange Zeit nach der Herstellung. Die aufgeklebte Dekorfolie dagegen schrumpft nicht.

Bei derartigen Platten sind daher zusätzliche Verformungen in Form von Rippen oder Sicken erforderlich, die die Spannung aufnehmen. Es zeigt sich jedoch, daß hier es trotz verschiedener Maßnahmen weiterhin zu Verwerfungen kommt. Schließlich ist darauf hinzuweisen, daß bei der Herstellung extrudierter Schaumstoffe Fluor-Chlor-Kohlenwasserstoffe frei werden, deren Verwendung ökologisch kritisch ist. Die Verwendung anderer Treibgase, die allerdings teilweise explosiv sind, ist mit erhöhten Aufwendungen verbunden.

Schließlich ist es auch noch bekannt, thermoplastisch verformbare Dekorfolien während eines Schäumvorganges direkt in den Formen mit dem Träger zu verformen und damit gleichzeitig zu verkleben. Diese Dekorplatten haben jedoch den Nachteil, daß der Kunstschaumstoffträger noch viele Wochen lang zur Schrumpfung neigt, während die thermoplastisch verformte Dekorfolie, die mit dem Kunststoffschaumblatt fest verbunden ist, ihre Größe nicht ändert. Die Folge sind Deckenplatten, die sich nach der Herstellung "schüsseln", da der geschrumpfte Kunststoffkörper sich verkleinert und die Dekorfläche an den Rändern zur Schaumstoffinnenseite hinzieht. Damit ist eine Verklebung praktisch nicht mehr möglich. Lediglich bei Anwendung mit Klebern großer Anfangshaftung lassen sich derartige geschüsselte Dekorplatten noch verkleben. Hierbei kommt es jedoch häufig zu Abbrüchen und Beschädigungen des Materials. Als weiterer Nachteil ist anzumerken, daß sehr hohe Investitionen erforderlich sind, da die Schaumformen hohe Werkzeugkosten bedingen. Gerade auf dem Gebiete der Dekorplatten ist ein ständiger Wechsel und eine große Mannigfaltigkeit an Dekoren wichtig.

Es stellt sich demnach die Aufgabe, ein Verfahren und eine Vorrichtung zur Herstellung von Dekorplatten anzugeben, die die vorgenannten Nachteile vermeiden und die es erlauben, daß eine wirtschaftliche und umweltverträgliche Fertigung von Dekorplatten möglich ist, bei der eine ungewollte Schüsselung ausgeschlossen ist.

Zur Lösung der Aufgabe wird ein Verfahren vorgeschlagen, das mit folgenden Verfahrensschritten arbeitet:
(1) Zerschneiden eines Schaumstoff-Blocks in einzelne plattenförmige Rohlinge;
(2) Auflegen und gereihtes Verschieben der Rohlinge auf einer horizontalen Ebene,
(3) Auflegen einer auf ihrer Unterseite mit einem Heißkleber versehenen Dekorfolien-Bahn auf die aufgereihten Rohlinge,
(4) Vorfixierung durch Erwärmung der Kontaktfläche zwischen Rohling-Oberseite und Dekorfolien-Bahn auf eine Temperatur, die den Heißkleber in einen Haftzustand überführt, bei dem ein leichtes Haften zwischen Rohling-Oberseite und Dekorfolien-Bahn eintritt,
(5) Schneiden der Dekorfolie im Bereich des Stoßes zweier Schaumstoffblätter;
(6) gemeinsames Transportieren der nach (4) verbundenen Teile in eine Preßstation, in der bei pneumatischer Fixierung des Rohlings ein reliefierter, erhitzter Preßstempel auf die Dekorfolie und den Rohling drückt und diese gleichzeitig reliefiert, wobei die Unterseite der Dekorfolie auf ihrer gesamten Fläche in Kontakt mit dem zum Schaumstoffblatt verformten Rohling verbleibt;
(7) Ausstoßen der Dekorplatten aus der Preßstation.

Ausgegangen wird demnach von einem plattenförmigen Rohling, der aus einem ausgeschrumpften, abgelagerten Polystyrol-Schaumblock geschnitten wird, bei dem der Schaumkunststoff eine Dichte vorzugsweise von 0,012 bis 0,025 g/cm³ hat. Die bei dem Verfahren verwendete Folie ist vorzugsweise eine Polystyrol- oder PVC-Folie der Dicke zwischen 0,001 bis 1,5 mm, d. h. mit einer Dicke, die weniger als die Hälfte der zuvor verwendeten Dekorfolien hat. Verwendbar sind sogar extrudierte Polystyrol-Schaumstoffolien.

Durch das Vorfixieren durch Erwärmung der Kontaktfläche ist ein verarbeitbares Vorprodukt entstanden, das bei der pneumatischen Fixierung des Rohlings in der Preßstation nicht mehr flattert oder sich verschieben kann, so daß ein einwandfreies und zentriertes Pressen mit einem Matrizenstempel erfolgen kann. Dabei wird die zunächst nur fixierte Folienauflagefläche auf der Kunststoff-Fläche befestigt und angeschmolzen, wobei die Reliefierung alle Höhen und Tiefen des Dekorfolienreliefs mit Kunststoffschaum hinterfüllt.

Überraschenderweise tritt eine unerwünschte Verformung praktisch nicht auf, da von vornherein ein Rohling verwendet wird, bei dem eine Verformung bereits unterdrückt ist. Durch die Verwendung einer relativ dünnen Dekorfolie ist außerdem nur eine sehr kurze Taktzeit erforderlich, da der Schmelzkleber sich mit dieser Folie sehr viel schneller erwärmt und einen verbesserten Kontakt herstellt. Es erfolgt eine sehr feine Verformung auch bei komplizierten Reliefformen.

Das Verformen mit dem reliefierten Preßstempel kann gegebenenfalls auch unter Auslassung von Teilflächen geschehen, an denen sich die Dekorfolie durch Schrumpfung glatt spannt.

Für den Fall, daß bei bestimmten Dicken des Schaumstoffblattes und der Dekorplatte es doch noch zu Verspannungen kommt, werden die Dekorplatten nach dem Pressen nochmals flächig erwärmt, um verbliebene Spannungen zu beseitigen. Dies kann beispielsweise durch das Ausrichten der Dekorplatte in einer Richtstation durch Erhitzen der der Folienfläche gegenüberliegenden Hauptfläche der Dekorplatte geschehen.

Vorzugsweise erfolgt in diesem Falle eine Erwärmung von der Unterseite her, wobei die Erwärmungstemperatur zwischen 80 und 150 °C, vorzugsweise zwischen 115 und 125 °C liegt. Diese Nachbehandlung wird während einer Zeitdauer von 15 s durchgeführt.

Das Vorfixieren erfolgt bei einer Temperatur, die zwischen 60 und 130°C liegt, wobei üblicherweise ein Heißkleber verwendet wird, der eine Schmelztemperatur von 110° C besitzt.

Der zur Verwendung kommende Polystyrol-Schaumstoff sollte eine Dichte von 0,012 bis 0,050 g/cm³ haben, wobei relativ preiswerter Schaumstoff verwendet werden kann.

Eine Vorrichtung zur Herstellung von Dekorplatten besitzt an sich bekannte Einzelteile, die in besonderer Weise kombiniert sind, um das eingangs genannte Verfahren durchführen zu können. Eine Vorrichtung gemäß Erfindung besitzt folgende Einzelteile:
- einen Verschiebetisch, auf dessen Verschiebeebene Schaumstoffblatt-Rohlinge auflegbar und verschiebbar sind,
- eine Dekorfolien-Vorratsrolle, von der eine Dekorfolienbahn über eine Spannungsausgleichsvorrichtung zur Verschiebeebene hin abziehbar ist,
- eine Vorfixierstation, in der über der Verschiebeebene eine höhenverstellbare plane Heizplatte angeordnet ist, mit einer anschließenden Schneidstation,
- und eine Preßstation, in der mittels unterhalb der Verschiebeebene angreifenden Vakuums die Rohlinge mit der anhaftenden Dekorfolie arretierbar sind, und in der ein erwärmbarer, reliefierter Matrizenstempel höhenstellbar angeordnet ist,
- sowie eine Ausstoßvorrichtung.

Vorzugsweise ist die Preßfläche des Matrizenstempels mit einer PTFE- (Polytetrafluoretylen-) Beschichtung versehen, die ein Haften verhindert. Für das Beseitigen von Spannungen wird ein beheizbarer Auslauftisch der Preßstation nachgeschaltet.

Ein weiterer Vorteil der eingangs genannten Verfahrensweise ist, daß auch die Randbereiche der Dekorplatten mit Folien versehen werden können, so daß die Sichtbereiche der Stöße die Schaumstoffblätter nicht erkennen lassen. Hierzu wird die Preßstation mit seitlich an die Dekorplatten heranfahrbaren, vorzugsweise unbeheizten Leisten versehen, mit denen über die ganze umlaufende Kante des Schaumstoffblattes hängende Dekorfolienrandteile an das Schaumstoffblatt andrückbar sind.

Vorzugsweise wird der Matrizenstempel mit einer auswechselbaren, in einem Rahmen gehaltenen Heizplatte versehen.

Die Spannungsausgleichsvorrichtung der Dekorfolie ist wenigstens einer vertikal ausgerichteten Tänzerrolle versehen. Um die relativ leichten Dekorplatten leicht von dem Matrizenstempel trennen zu können, ist dieser mit einer pneumatischen Trennvorrichtung versehen, wobei diese vorzugsweise aus Luftführungskanälen und Austrittsdüsen im Bereiche der Oberseite der fertigen Dekorplatte besteht.

Die Erfindung wird anhand der Zeichnung erläutert. Die Figuren der Zeichnung zeigen im einzelnen:
- Fig. 1: eine schematische Darstellung einer erfinderischen Vorrichtung in Seitenansicht;
- Fig. 2: die Vorrichtung gemäß Fig. 1, von oben gesehen;
- Fig. 3: eine perspektivische Ansicht auf einen Preßstempel;
- Fig. 4a / 4b: Umrandung der Dekorplatte durch die Führungsleisten; und
- Fig. 5: eine perspektivische Ansicht auf Spannvorrichtung und Vorfixierstation.

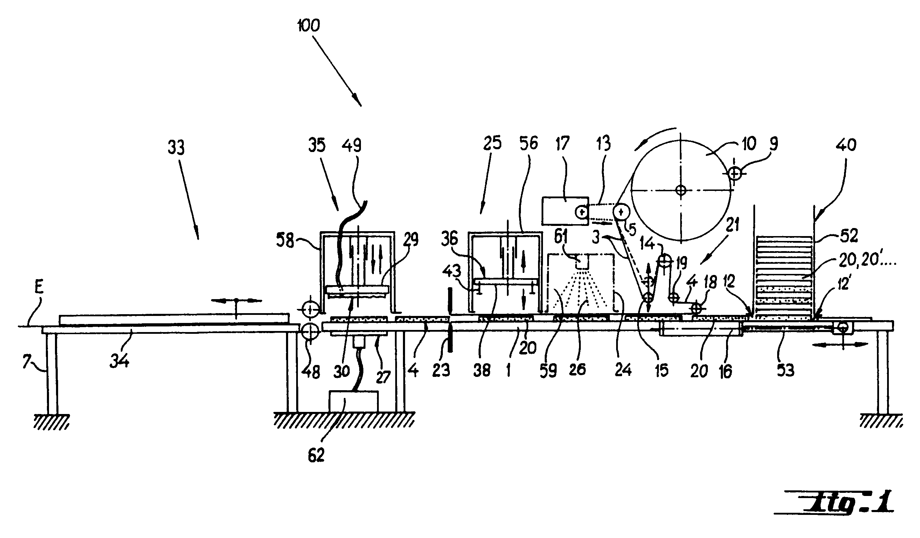

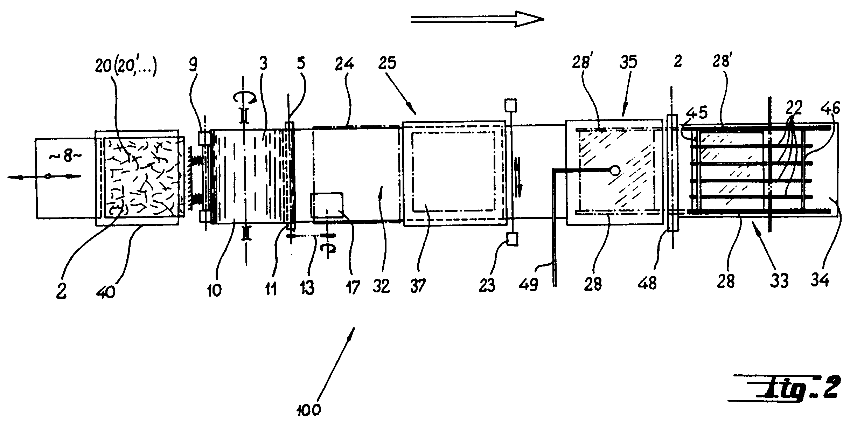

In den Fig. 1 und 2 ist eine Vorrichtung 100 zur Herstellung von Dekorplatten 2 dargestellt. In technologischer Reihenfolge gesehen besteht die Vorrichtung 100 aus einem Rohlingstapelhalter 40, einer Dekorfolien-Vorratsrolle 10, einer Sprühvorrichtung 24, einer Vorfixierstation 25, einer Schneidvorrichtung 23, einer Preßstation 35 und einer Ausgabestation 33. Die Elemente 40; 10, 24; 25; 23 und 35 sind an einem länglichen Verschiebetisch 1 aufgereiht. Ein Auslauftisch 7 bildet eine Ausgabestation 33 und schließt sich an den Verschiebetisch 1 an; der Auslauftisch bildet mit dem Verschiebetisch eine gemeinsame Ebene E, auf der die Dekorplatten 2 schrittweise produziert werden.

Wie an sich bekannt, werden Polystyrol-Schaumstoffrohlinge 20, 20' aus einem abgelagerten Schaumstoffblock (nicht dargestellt) herausgeschnitten, wobei sie eine Dicke von etwa 5 - 15 mm bei einer Größe von etwa 50 x 50 cm haben. Sie werden im Rohlingstapelhalter 40 gestapelt.

Der Rohlingstapelhalter 40 ist ein rechteckiger, von oben offener Behälter 52 zur Stapelung von vielen Polystyrol-Schaumstoff-Rohlingen 20, 20', von denen immer der unterste mittels einer zyklisch arbeitenden Schiebeplatte 8 aus dem Behälter 52 in Richtung Verschiebetisch 1 ausgestoßen wird.

Dazu weist der Behälter 52 zwei Schlitze 12, 12' auf. Die Schiebeplatte 8 ist pneumatisch über eine Kolben-Zylinder-Anordnung 16, 53 betätigbar und gesteuert.

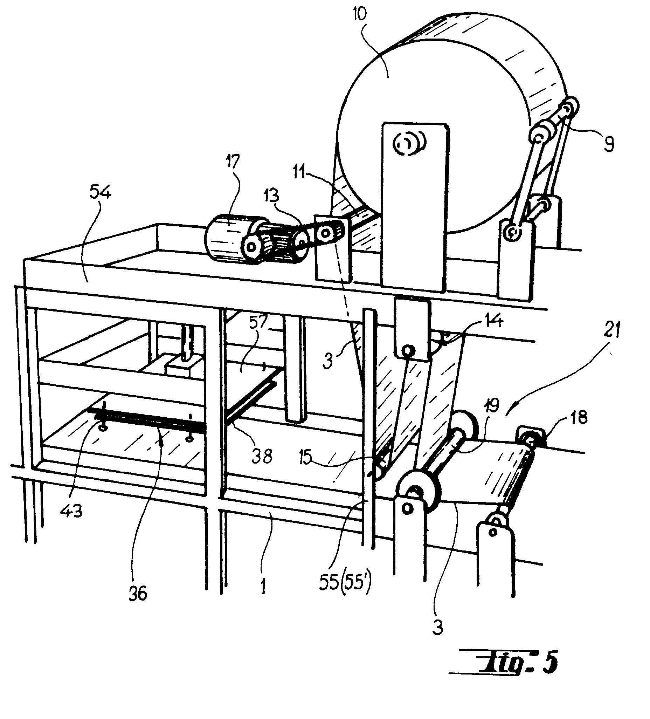

Die Dekorfolien-Vorratsrolle 10 ist auf einem horizontal angeordneten oberen Rahmen 54 (vgl. Fig. 5) oberhalb des Verschiebetisches 1 so aufgesetzt, daß ausreichend viel Platz für eine Spannungsausgleichsvorrichtung 21 der abzuwickelnden Dekorfolie 3 verbleibt. Die Spannungsausgleichsvorrichtung 21 besteht aus drei Umlenkrollen 14, 18, 19. Ferner ist eine Tänzerrolle 15 vorhanden, die an ihren Stirnseiten verschiebbar an zwei vertikal angeordneten Führungsstreben 55, 55' geführt ist. Mit Hilfe der Spannungsausgleichsvorrichtung 21 bleibt immer ein ausreichend großes Vorratsstück an Dekorfolie 3 für einen praktisch spannungslosen Abzug verfügbar.

Am oberen Rahmen 54 ist auch eine Bremsrolle 9 und eine durch einen Elektromotor 17 über eine Kette 13 angetriebene Abzugsrolle 5 angebracht. Ferner ist an dem Verschiebetisch 1 die in Form eines Rahmens 56 gebildete Vorfixierstation 25 angebracht, die insbesondere eine höhenverstellbare Heizplatte 36 umfaßt. Die Heizplatte 36 besteht aus einer parallel zur Ebene E angeordnete Metallplatte 38 mit einem daran eingebauten Heizelement 57.

Im weiteren Verlauf gelangen die zu fertigenden Dekorplatten zu der Preßstation 35, zu der insbesondere ein Rahmen 58 gehört. An dem Rahmen 58 ist höhenverstellbar ein Matrizenstempel 30 angebracht, bestehend aus einer Heizplatte 29 und einer an deren Unterseite 59 angebrachten Matrizenplatte 31.

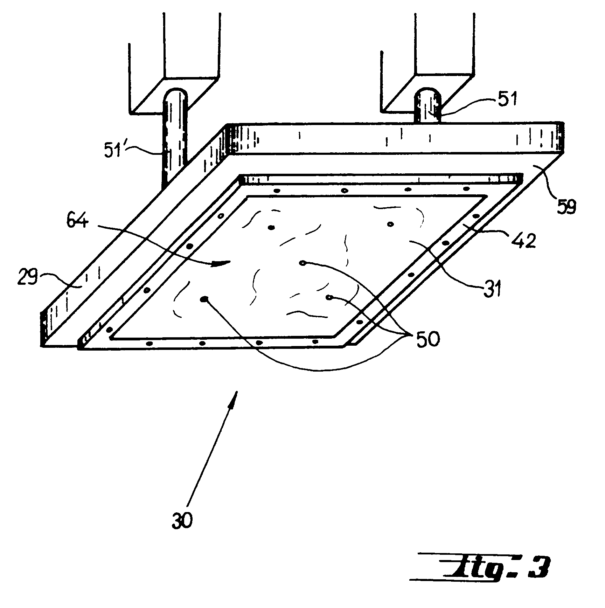

Wie Fig. 3 zeigt, besitzt der Matrizenstempel 30 einen rechteckigen Rahmen 42, in dem die ebene oder reliefierte Matrizenplatte 31 auswechselbar eingesetzt ist. Die Matrizenplatte 31 ist mit einigen feinen Öffnungen 50 versehen, die über die Fläche verteilt sind und die über weitere koinzidierende Bohrungen (nicht dargestellt) mit der Heizplatte 29 mit einer Preßluft-Zufuhrleitung 49 verbunden sind. Die Eindringtiefe der Matrizenplatte ist durch entsprechende Anschläge begrenzbar.

Sowohl das Heizelement 36 der Vorfixierstation 25 als auch der Preßstempel 30 der Preßstation 35 sind mittels Kolben-Zylinder-Anordnung 51, 51' pneumatisch verschiebbar. Das Heizelement 36 ist ferner mit vier Anschlagbolzen 43 versehen, die einstellbar sind und eine gewünschte Einstellhöhe gegenüber der Dekorfolie 3 ermöglichen.

An dem Verschiebetisch 1 ist ferner unter dem Rahmen 58 der Preßstation 35 ein Stempeltisch 27 angeordnet, gegen den während des Preßvorganges der Preßstempel 30 drückt. Der Stempeltisch 27 ist in bekannter Weise mit einer perforierten Platte (nicht dargestellt) versehen, auf die jeweils ein Schaumstoff-Rohling 20, 20' zur Arretierung angesaugt wird.

Die Sprühvorrichtung 24 ist zwischen der Spannvorrichtung 21 und der Vorfixierstation 25 angeordnet. Ihre Aufgabe ist es, die Oberfläche 32 der Dekorfolie 3 mit einem flüssigen Trennmittel 26 zu besprühen, z. B. mit einem Silikonöl. Die Sprühvorrichtung 24 besteht aus einer Kammer 59 und einem sich in der Kammer befindlichen Impulsgeber 61.

Möglich ist auch, die Sprühvorrichtung 24 zwischen der Vorfixierstation 25 und der Preßstation 25 bzw. zwischen der Schneidvorrichtung 23 und der Preßstation 35 vorzusehen.

Wenn die Matrizenplatte 31 mit einer haftungsvermindernden Beschichtung, vorzugsweise aus PTFE, versehen ist, kann gegebenenfalls auch auf das Einsprühen mit Trennmittel verzichtet werden.

Der Auslauftisch 7 besitzt eine glatte, aus Leichtmetall hergestellte, beheizbare Tischplatte 34, deren Länge so bestimmt ist, daß sie gleichzeitig mehrere von hintereinander liegenden Dekorplatten 2 aufnimmt, beispielsweise drei Dekorplatten, die sich während aufeinanderfolgender Hübe infolge gleichmäßiger, etwa 30 s dauernder Wärmezufuhr ausrichten.

### Funktionsbeschreibung

Der unterste Schaumstoffrohling 20 wird mit Hilfe der Schiebeplatte 8 aus dem Rohlingstapelhalter 40 durch den Schlitz 12 ausgestoßen.

Damit gerät der Rohling 20 unter die aus der Vorratsrolle 10 sich abwickelnde Dekorfolie 3. Angemerkt sei, daß die Vorrichtung 100 zyklisch arbeitet, d. h. jeder den Rohlingstapelhalter 40 verlassende Rohling wird nach und nach den selben, sich wiederholenden Bearbeitungsstufen unterzogen.

Nach der Verformung ist der Preßvorgang beendet. Mit Hilfe von Preßluft, die durch kleine Öffnungen 50 oberhalb der Dekorfolie auf den Preßling drückt, wird dieser aus der Preßform ausgestoßen.

Die Schaumstoffrohlinge liegen damit auf dem Verschiebetisch 1, auf dessen Verschiebeebene E sie verschiebbar sind. Im vorliegenden Falle wird der Rohling beim nächsten Hub weiterbefördert in den Bereich einer Sprühvorrichtung 24, bei der die auf dem Rohling lose aufliegende Dekorfolie mit einem Trennmittel 26 leicht besprüht wird, um die nachfolgenden Trennvorgänge von den Heizplatten zu erleichtern.

In der nächsten Phase, im Bereich der Vorfixierstation 25, wird die Dekorfolie 3 vorfixiert durch Erwärmung der Kontaktfläche zwischen Rohling-Oberseite und Dekorfolien-Bahn auf eine Temperatur, die den an der Dekorfolie haftenden Heißkleber in einen Haftzustand überführt, bei dem ein leichtes Haften zwischen Rohling-Oberseite und Dekorfolien-Bahn eintritt.

Dies geschieht dadurch, daß die Metallplatte 38, die beispielsweise auf eine Temperatur von 90 - 100° eingestellt ist, die Heißkleber-Schicht der Dekorfolie gleichmäßig anschmilzt, indem sie auf die Dekorfolie 3 unter leichtem Andruck abgesenkt wird.

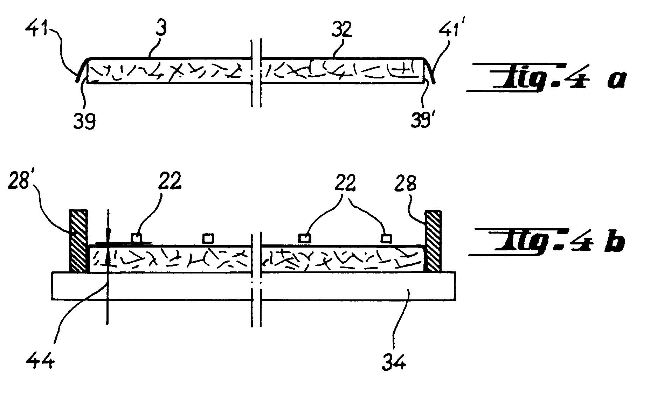

Anschließend gelangen die vorfixierten Teile in den Bereich einer Schneidvorrichtung 23, wo die Dekorfolie im Bereich des Stoßes zweier Schaumstoffblättr geschnitten wird. Damit entsteht ein Gebilde, das aus dem Rohling 20 und einem Folienstück - Fig. 4a im Querschnitt - mit nicht aufgeklebten Rändern 41, 41' besteht.

Das Vorfixieren ist deshalb erforderlich, weil in der nachfolgenden Preßstation das Ansaugen und Arretieren des mit der Dekorfolie 3 versehenen Rohlings üblicherweise sonst zu einem Flattern und leichtem Verschieben der Dekorfolie führt, was unbedingt vermieden werden muß.

Das Abziehen der Dekorfolie 3 wird ebenfalls durch das Vorfixieren erleichtert. Hierbei wird die Abzugsbewegung durch den Elektromotor 17 unterstützt, der die Abzugsrolle 5 antreibt. Wichtig ist auch die Funktion der Spannungsausgleichsvorrichtung, da mit Hilfe der Tänzerrolle 15 jeweils praktisch spannungslos ein passendes Stück Dekorrolle weitergezogen wird.

Das eigentliche Reliefieren des Rohlings 20 mit der aufliegenden Dekorfolie erfolgt in der Preßstation 35. Hier wird der Rohling mit der vorfixierten Dekorfolie angesaugt und damit arretiert. Hierfür ist eine Vakuumpumpe 62 vorgesehen.

Der Matrizenstempel senkt sich herab. Er ist gleichmäßig auf seiner gesamten Fläche auf eine Temperatur von 125 - 180° C erhitzt, vorzugsweise 170° C im Kontaktbereich. Die gleichmäßige Erhitzung kann entweder durch sorgfältig verteilte Elektroheizelemente oder aber durch ein Heizöl erfolgen. Bei dem Druck des Matrizenstempels zwischen 1000 und 2500 Pa beträgt die Preßdauer etwa 0,1 - 10 s, vorzugsweise lediglich 0,7 s.

Bei diesem Arbeitsgang wird demnach die Dekorfolie verformt, angepreßt und der Schmelzkleber nochmals aktiviert. Die Polystyrolschaumträgerplatte wird an der Kontaktfläche unterhalb der Dekorfolie mit dieser verformt und verbunden. Die gesamte Dekoroberfläche wird druckfest anschließend verfestigt, so daß die Festigkeit entsprechend einer extrudierten Polystyrolschaumfolie erreicht wird.

Über die Randzone steht ein Teil der Dekorfolie über. Die Randbesäumung wird mit Hilfe der Führungsleisten 28, 28' durchgeführt, die seitlich an die Kante gedrückt werden und dann dort haften. Auch die Eckengestaltung wird durch diese Art der Kantengestaltung erleichtert. Es ergibt sich durch entsprechende eckübergreifende Teile der Leisten eine Eckumrundung, die sowohl ästhetisch ist als auch der Befestigung im Eckbereich dient. Damit ist ein auf Gehrung geschnittener Eckrahmen nicht erforderlich.

Diese Führungsleisten 28, 28', die also die Randformleisten sind, sind nicht beheizt. Es zeigt sich, daß die aufliegende Kunststoffolie noch so warm ist, daß sie leicht verformt werden kann. Im Gegenteil: Wenn die Randleisten auch beheizt sein würden, würde sich das leicht schmelzbare Styropormaterial ebenfalls verformen, so daß die genauen Abmessungen nicht mehr gegeben wären.

Nach Durchlauf durch die Preßstation und Anheben des Preßstempels werden die Platten weiterbefördert und gelangen auf den Auslauftisch 7. Hierbei handelt es sich um einen beheizten, etwa 120° heißen Tisch, der die Platten nochmals von der nicht-beschichteten Seite (von unten) beheizt. Verformungen und Verwerfungen, die sie aufgrund der Behandlung in der Preßstation haben, werden damit wieder ausgeglichen. Nach oben werden die Platten von Halteleisten 22 gehalten. Die Platten verbleiben etwa 30 s auf dem erhitzten Bereich und zeigen anschließend keine Verformung mehr.

Zusätzlich kann die Platte auch noch unmittelbar im Anschluß an den Preßvorgang durch eine Doppelwalzenanordnung 48 laufen, um eine Ausrichtung zu ermöglichen.

## Patentansprüche

1. Verfahren zur Herstellung von Dekorplatten (2), die aus einem Polystyrol-Schaumstoffblatt und aus einem mit diesem verbundenen Dekorfolien-Abschnitt bestehen, mit folgenden Verfahrensschritten:
(1) Zerschneiden eines Schaumstoff-Blocks in einzelne plattenförmige Rohlinge (20, 20' ...);
(2) Auflegen und gereihtes Verschieben der Rohlinge auf einer horizontalen Ebene (E),
(3) Auflegen einer auf ihrer Unterseite (4) mit einem Heißkleber versehenen Dekorfolien-Bahn (3) auf die aufgereihten Rohlinge,
(4) Vorfixierung durch Erwärmung der Kontaktfläche zwischen Rohling-Oberseite und Dekorfolien-Bahn auf eine Temperatur, die den Heißkleber in einen Haftzustand überführt, bei dem ein leichtes Haften zwischen Rohling-Oberseite und Dekorfolien-Bahn eintritt,
(5) Schneiden der Dekorfolie im Bereich des Stoßes zweier Schaumstoffblätter,
(6) gemeinsames Transportieren der nach (4) verbundenen Teile in eine Preßstation (35), in der bei pneumatischer Fixierung des Rohlings ein reliefierter, erhitzter Preßstempel auf die Dekorfolie und den Rohling drückt und diese gleichzeitig reliefiert, wobei die Unterseite der Dekorfolie auf ihrer gesamten Fläche in Kontakt mit dem zum Schaumstoffblatt verformten Rohling verbleibt;
(7) Ausstoßen der Dekorplatten aus der Preßstation.

2. Verfahren nach Anspruch 1, dadurch gekennzeichnet, daß die Dekorplatten (2) nach dem Pressen nochmals flächig erwärmt werden, um verbliebene Spannungen zu beseitigen.

3. Verfahren nach Anspruch 2, dadurch gekennzeichnet, daß die Dekorplatte von ihrer Unterseite (4) erwärmt wird.

4. Verfahren nach Anspruch 2 oder 3, dadurch gekennzeichnet, daß die Erwärmungstemperatur zwischen 80 und 150 °C, vorzugsweise zwischen 115 und 125 °C liegt.

5. Verfahren nach Anspruch 2 bis 4, dadurch gekennzeichnet, daß die Nachbehandlung wenigstens während einer Zeitdauer von 15 s durchgeführt wird.

6. Verfahren nach Anspruch 1, dadurch gekennzeichnet, daß das Vorfixieren bei einer Temperatur von 60 bis 130 °C erfolgt.

7. Verfahren nach einem der vorhergehenden Ansprüche, dadurch gekennzeichnet, daß hierbei eine Dekorfolie aus Polystyrol oder PVC oder aus extrudiertem Polystyrolschaumstoff mit einer Dicke zwischen 0,001 bis 1,5 mm verwendet wird.

8. Verfahren nach einem der bisherigen Ansprüche, dadurch gekennzeichnet, daß die Dekorfolie unter Auslassung von Teilflächen in Kontakt mit dem zum Schaumstoffblatt verformten Rohling verbleibt und sich in den ausgelassenen Teilflächen durch Schrumpfung glatt spannt.

9. Verfahren nach einem der vorhergehenden Ansprüche, dadurch gekennzeichnet, daß hierbei ein Polystyrol-Schaumstoff mit einer Dichte von 0,012 bis 0,050 g/cm³ verwendet wird.

10. Vorrichtung zur Herstellung von Dekorplatten, die aus einem Polystyrol-Schaumstoffblatt und aus einem mit diesem verbundenen Dekorfolien-Abschnitt bestehen, mit folgenden Einzelteilen:
- einen Verschiebetisch (1), auf dessen Verschiebeebene (E) Schaumstoffblatt-Rohlinge (20, 20') auflegbar und verschiebbar sind,
- einer Dekorfolien-Vorratsrolle (10) von der eine Dekorfolienbahn (3) über eine Spannungsausgleichsvorrichtung (21) zur Verschiebeebene (E) hin abziehbar ist,
- einer Vorfixierstation (25), in der über der Verschiebeebene (E) eine höhenverstellbare plane Heizplatte (36) angeordnet ist,
- einer Schneidvorrichtung 23,
- und einer Preßstation (35), in der mittels unterhalb der Verschiebeebene angreifenden Vakuums die Rohlinge mit der anhaftenden Dekorfolie arretierbar sind, und in der ein erwärmbarer, reliefierter Patrizenstempel (30) höhenstellbar angeordnet ist,
- sowie mit einer Ausstoßvorrichtung.

11. Vorrichtung nach Anspruch 10, dadurch gekennzeichnet, daß die Preßfläche (64) des Patrizenstempels mit PTFE versehen ist.

12. Vorrichtung nach Anspruch 10, dadurch gekennzeichnet, daß der Preßstation (35) ein beheizbarer Auslauftisch (7) nachgeschaltet ist.

13. Vorrichtung nach Anspruch 10, dadurch gekennzeichnet, daß die Preßstation (35) mit seitlich an die Dekorplatten-Position heranfahrbaren, vorzugsweise unbeheizten Leisten (28; 28') versehen ist, mit denen über die Kante (39; 39') des Schaumstoffblattes hängende Dekorfolienrandteile (41, 41') an das Schaumstoffblatt andrückbar sind.

14. Vorrichtung nach einem der vorhergehenden Ansprüche 10 bis 13, dadurch gekennzeichnet, daß der Patrizenstempel mit einer auswechselbaren,in einem Rahmen (42) gehaltenen Heizplatte (31) versehen ist.

15. Vorrichtung nach Anspruch 10, dadurch gekennzeichnet, daß die Spannungsausgleichsvorrichtung (21) wenigstens eine vertikal ausgerichtete Tänzerrolle (15) umfaßt.

16. Vorrichtung nach einem der vorhergehenden Ansprüche 10 bis 15, dadurch gekennzeichnet, daß der Patrizenstempel (30) sowie gegebenenfalls auch die Heizplatte (29) der Preßstation mit einer pneumatischen Trennvorrichtung (49, 50) versehen ist.

## Claims

1. A method of producing decorative panels (2) consisting of a polystyrene foam sheet and a decorative film portion connected thereto, comprising the following process steps:
(1) Cutting a foam block into individual blanks of panel shape (20, 20' ...);
(2) Placing the blanks on a horizontal plane (E) and displacing them in line,
(3) Placing a decorative film web (3) on the blanks in line, the web (3) being provided with a heat sealer on its underside (4),
(4) Prefixing by heating the contact surface between the blank top and the decorative film web to a temperature which converts the heat sealer to an adhesive state at which a slight adhesion occurs between the top of the blank and the decorative film web,
(5) Cutting the decorative film in the region of the joint between two foam sheets,
(6) Joint transportation of the parts, connected according to (4), to a pressing station (35) in which, with pneumatic fixing of the blank, a heated relief press punch presses on the decorative film and the blank and at the same time forms a relief therein, the underside of the decorative film remaining in contact over its entire surface with the blank formed into the foam sheet,
(7) Ejection of the decorative panels from the pressing station.

2. A method according to claim 1, characterised in that, after pressing, the decorative panels (2) are again surface heated in order to eliminate any residual stresses.

3. A method according to claim 2, characterised in that the decorative panel is heated from its underside (4).

4. A method according to claim 2 or 3, characterised in that the heating temperature is between 80 and 150°C, preferably between 115 and 125°C.

5. A method according to claims 2 to 4, characterised in that the after-treatment is carried out at least for a period of 15 seconds.

6. A method according to claim 1, characterised in that the prefixing is effected at a temperature of 60 to 130°C.

7. A method according to any one of the preceding claims, characterised in that the decorative film used consists of polystyrene or PVC or extruded polystyrene foam having a thickness of between 0.001 to 1.5 mm.

8. A method according to any one of the previous claims, characterised in that the decorative film remains in contact, except for omitted partial surfaces, with the blank formed into the foam sheet, and stretches flat by shrinkage in the omitted partial surfaces.

9. A method according to any one of the preceding claims, characterised in that a polystyrene foam is used which has a density of 0.012 to 0.050 g/cm³.

10. Apparatus for the production of decorative panels consisting of a polystyrene foam sheet and a decorative film portion connected thereto, comprising the following parts:
- a displacement table (1) on the displacement plane (E) of which foam sheet blanks (20, 20') can be placed and displaced,
- a decorative film supply reel (10) from which a decorative film web (3) can be drawn off towards the displacement plane (E) via a tension equalising device (21),
- a prefixing station (25) in which a vertically adjustable flat heating plate (36) is disposed above the displacement plane (E),
- a cutting device (23),
- and a pressing station (35), in which, by means of a vacuum acting beneath the displacement plane, the blanks with the adhering decorative film can be retained, and in which a heatable relief punch (30) is disposed to be vertically movable,
- and with an ejection device.

11. Apparatus according to claim 10, characterised in that the pressing surface (64) of the punch is provided with PTFE.

12. Apparatus according to claim 10, characterised in that the pressing station (35) is followed by a heatable delivery table (7).

13. Apparatus according to claim 10, characterised in that the pressing station (35) is provided with preferably unheated strips (28, 28') which are adapted to approach the decorative panel position laterally, by means of which strips decorative film edge parts (41, 41') hanging over the edge (39; 39') of the foam sheet can be pressed against the latter.

14. Apparatus according to any one of the preceding claims 10 to 13, characterised in that the punch is provided with an interchangeable heating plate (31) held in a frame (42).

15. Apparatus according to claim 10, characterised in that the tension equalisation device (21) comprises at least one vertically aligned idling roller (15).

16. Apparatus according to any one of the preceding claims 10 to 15, characterised in that the punch (20) and, if required, the heating plate (29) of the pressing station is provided with a pneumatic separating device (49, 50).

## Revendications

1. Procédé de fabrication de panneaux décoratifs (2), qui se composent d'une feuille de mousse, ou produit alvéolaire, de polystyrène et d'un segment de feuille décorative qui lui est attaché, qui comprend les étapes consistant à:
(1) découper un bloc de matière alvéolaire en ébauches individuelles (20, 20' ...) en forme de panneaux,
(2) disposer les ébauches sur un plan horizontal (E) et les y déplacer par translation, en file,
(3) appliquer sur les ébauches disposées en file une bande (3) de feuilles décoratives pourvue d'un adhésif fusible sur son côté inférieur (4),
(4) préfixer en chauffant la surface de contact entre le côté supérieur de l'ébauche et la bande de feuilles décoratives à une température qui fait passer l'adhésif fusible à un état d'adhérence dans lequel une légère adhérence apparaît entre le côté supérieur de l'ébauche et la bande de feuille décorative,
(5) couper la feuille décorative dans la zone du joint entre deux feuilles de matière alvéolaire,
(6) transporter en commun, après (4), les pièces attachées entre elles vers une station de compression (35) dans laquelle, lors d'un fixage pneumatique de l'ébauche, un plateau de compression chauffé, en relief, est poussé sur la feuille décorative et l'ébauche et forme simultanément un relief sur celles-ci, le côté inférieur de la feuille décorative restant sur toute sa surface au contact de l'ébauche qui est façonnée pour constituer la feuille de matière alvéolaire;
(7) éjecter les panneaux décoratifs hors de la station de compression.

2. Le procédé selon la revendication 1, caractérisé en ce que les panneaux décoratifs (2) sont chauffés une nouvelle fois à plat, après la compression, pour éliminer des contraintes résiduelles.

3. Procédé selon la revendication 2, caractérisé en ce que le panneau décoratif est chauffé par son côté inférieur (4).

4. Procédé selon la revendication 2 ou 3, caractérisé en ce que la température de chauffage est comprise entre 80 et 150° C, de préférence entre 115 et 125° C.

5. Procédé selon l'une des revendications 2 à 4, caractérisé en ce que le traitement postérieur est exécuté au moins pendant un laps de temps de 15 s.

6. Procédé selon la revendication 1, caractérisé en ce que les composants sont préfixés à une température de 60 à 130° C.

7. Procédé selon l'une des revendications précédentes, caractérisé en ce que l'on utilise ici une feuille décorative en polystyrène ou en PVC ou en mousse de polystyrène extrudée d'une épaisseur comprise entre 0,001 et 1,5 mm.

8. Procédé selon l'une des revendications précédentes, caractérisé en ce que la feuille décorative reste, à l'exclusion de surfaces partielles, au contact de l'ébauche, qui est façonnée pour constituer la feuille de matière alvéolaire, et cette feuille se tend à plat par retrait dans les surfaces partielles exclues.

9. Procédé selon l'une quelconque des revendications précédentes, caractérisé en ce que la densité de la mousse de polystyrène utilisée est de 0,012 à 0,050 g/cm³.

10. Dispositif de fabrication de panneaux décoratifs qui se composent d'une feuille de mousse, ou produit alvéolaire, de polystyrène et d'un segment de feuille décorative qui lui est attaché, qui comprend les éléments individuels suivants:
- une table de translation (1), sur le plan de translation (E) de laquelle des ébauches de feuilles de mousse (20, 20') peuvent être disposées et déplacées;
- un rouleau de réserve (10) de feuille décorative à partir duquel une bande (3) de feuille décorative peut être tirée vers le plan de translation (E) en passant par un dispositif (21) de compensation de contraintes,
- une station (25) de fixage préalable dans laquelle une plaque chauffante plane (36) réglable en hauteur est disposée au-dessus du plan de translation (E),
- un dispositif de coupe (23),
- et une station de compression (35) dans laquelle les ébauches pourvues de la feuille décorative qui y adhère peuvent être bloquées au moyen d'un vide appliqué au-dessous du plan de translation, et dans laquelle est agencé un poinçon de compression en relief (30) à température réglable et à hauteur réglable,
- ainsi qu'un dispositif d'éjection.

11. Dispositif selon la revendication 10, caractérisé en ce que la surface de compression (64) du plateau de compression de la matrice est pourvue de PTFE.

12. Dispositif selon la revendication 10, caractérisé en ce qu'une table de sortie à température réglable (7) est disposée en aval de la station de compression (35).

13. Dispositif selon la revendication 10, caractérisé en ce que la station de compression (35) est pourvue de rebords de préférence non chauffés (28; 28'), qui peuvent être amenés latéralement à la position des panneaux décoratifs et au moyen desquelles des parties de bord (41, 41') des feuilles décoratives suspendues au-dessus de l'arête (39; 39') de la feuille de mousse peuvent être appuyées sur la feuille de mousse.

14. Dispositif selon l'une des revendications 10 à 13, caractérisé en ce que le plateau de compression est pourvu d'une plaque chauffante interchangeable (31), tenue dans un cadre (42).

15. Dispositif selon la revendication 10, caractérisé en ce que le dispositif (21) de compensation de contraintes comprend au moins un rouleau danseur (15) mobile verticalement.

16. Dispositif selon l'une des revendications 10 à 15, caractérisé en ce que le plateau de compression (30) et éventuellement la plaque chauffante (29) de la station de compression sont pourvues d'un dispositif pneumatique (49, 50) de séparation.
